(19) Europäisches Patentamt / European Patent Office / Office européen des brevets

(11) **EP 4 340 059 A1**

(12) **EUROPEAN PATENT APPLICATION**

(43) Date of publication:
**20.03.2024 Bulletin 2024/12**

(21) Application number: **23196784.5**

(22) Date of filing: **12.09.2023**

(51) International Patent Classification (IPC):
*H01M 4/134* (2010.01)    *H01M 4/36* (2006.01)
*H01M 4/38* (2006.01)    *H01M 4/62* (2006.01)
*H01M 10/0525* (2010.01)    *H01M 4/02* (2006.01)

(52) Cooperative Patent Classification (CPC):
**H01M 4/625; H01M 4/134; H01M 4/366;
H01M 4/386; H01M 10/0525;** H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.09.2022 KR 20220115649**

(71) Applicant: **Hansol Chemical Co., Ltd
Seoul 06169 (KR)**

(72) Inventors:
• **Park,, Byunghoon**
  **Jeollabuk-do (KR)**
• **Kang,, Sunghwan**
  **Jeollabuk-do (KR)**
• **Gong,, Minkyung**
  **Jeollabuk-do (KR)**
• **Park,, Jooyeon**
  **Jeollabuk-do (KR)**
• **Kwon,, Seman**
  **Jeollabuk-do (KR)**

(74) Representative: **J A Kemp LLP
80 Turnmill Street
London EC1M 5QU (GB)**

(54) **ANODE ACTIVE MATERIAL, METHOD FOR PREPARING THE SAME, AND RECHARGEABLE LITHIUM BATTERY COMPRISING THE SAME**

(57) The disclosure relates to an anode active material having a core-shell structure, the anode active material including a core including porous spherical particles including metal particles and amorphous carbon, and a shell including one or more of crystalline carbon and amorphous carbon, in which the metal particles of the core are physically connected to each other through the amorphous carbon of the core, a method of preparing the same, and a lithium secondary battery including the same.

**FIG. 1**

EP 4 340 059 A1

**Description**

CROSS-REFERENCE TO RELATED APPLICATION

This application claims the benefit of Korean Patent Application No. 10-2022-0115649 filed on September 14, 2022, in the Korean Intellectual Property Office, the entire disclosure of which is incorporated herein by reference for all purposes.

BACKGROUND

1. Field of the Invention

One or more embodiments relate to an anode active material, a method of preparing the same, and a lithium secondary battery including the same.

2. Description of the Related Art

Lithium ion batteries (LIBs) are adopted and used as a major power supply source of mobile electronic devices, since they have a high energy density and are easy to design. The range of applications thereof are being widened to electric cars or new renewable energy power storage device.

In order to apply to new application fields, research on LIB materials having characteristics such as a higher energy density and longer lifespan is continuously required. Particularly, in a case of an anode material, research has been conducted on various materials such as carbon, silicon, tin, germanium, and the like.

Among them, a silicon-based anode material have received much attention because they have a very high theoretical capacity compared to a currently commercialized graphite anode material. However, the silicon-based anode material has a problem that an unstable solid electrolyte interphase (SEI) layer is formed due to a side reaction between a silicon surface and an electrolyte, resulting in deterioration of electrochemical characteristics, or an anode material is pulverized due to an internal stress due to rapid volume expansion which occurs during charging and discharging.

In order to solve the above problems, researches on a nanostructured silicon-based anode material, surface modification, and heterogeneous material compounding have been conducted. In particular, a method of coating a surface of a carbon material or compounding the carbon material has been widely studied mainly in the industry. Various surface treatments using a carbon material required complicated and expensive processes, and some lifespan characteristics of the silicon-based anode material was improved through the surface treatment using carbon material. However, the concept of the material design was required to be fundamentally corrected to respond to a great volume change occurring during charging and discharging the silicon-based anode material.

That is, in the compounding using a carbon material of the related art, it was difficult to reach stable lifespan characteristics required for a LIB, because the compounding with carbon was performed without improving a physical shape of the silicon-based anode material. Therefore, in order to improve unstable lifespan characteristics of the silicon-based anode material while suppressing volume expansion of the silicon-based anode material, there is a demand for development of a technology for structural modification of a high-capacity silicon-based anode active material.

SUMMARY

Embodiments provide an anode active material for a secondary battery having a high capacity, a high energy density, and a long lifespan characteristic for stable charging and discharging even after a long-term use, and a lithium secondary battery including the same.

However, goals obtainable from the present disclosure are not limited to the above-mentioned goal, and other unmentioned goals can be clearly understood from the following description by one of ordinary skill in the art to which the present disclosure pertains.

According to an embodiment of the present disclosure, there is provided an anode active material for a lithium secondary battery having a core-shell structure composite, the anode active material including a core including porous spherical particles including metal particles and amorphous carbon, and a shell including one or more of crystalline carbon and amorphous carbon, in which the metal particles of the core are physically connected to each other through the amorphous carbon of the core.

According to another embodiment of the present disclosure, there is provided a method of preparing an anode active material, the method including step a) of dispersing metal particles and amorphous carbon in a solvent, step b) of preparing a spherical precursor by performing spray drying for a dispersed solution, step c) of mixing and compounding the spherical precursor with one or more of crystalline carbon and amorphous carbon, and step d) of performing heat treatment.

According to still another embodiment of the present disclosure, there is provided a lithium secondary battery including an anode, a cathode, and an electrolyte, in which the anode includes the anode active material according to an embodiment of the present disclosure.

Additional aspects of example embodiments will be set forth in part in the description which follows and, in part, will be apparent from the description, or may be learned by practice of the disclosure.

In the anode active material according to an embodiment of the present disclosure, all silicon primary particles are connected to each other through the amorphous carbon ensured in the core portion, and the amorphous carbon may serve as an electrical transmission path to the silicon primary particles and may perform a function of ensuring structural stability of the core portion, so that an anode active material having an electrical conduction path of silicon maintained even with continuous charge and discharge may be provided, thereby enabling a stable electrochemical reaction to exhibit improved lifespan (long lifespan) characteristic.

It should be understood that the effects of the present disclosure are not limited to the above-described effects, but are construed as including all effects that can be inferred from the configurations and features described in the following description or claims of the present disclosure.

BRIEF DESCRIPTION OF THE DRAWINGS

These and/or other aspects, features, and advantages of the invention will become apparent and more readily appreciated from the following description of example embodiments, taken in conjunction with the accompanying drawings of which:

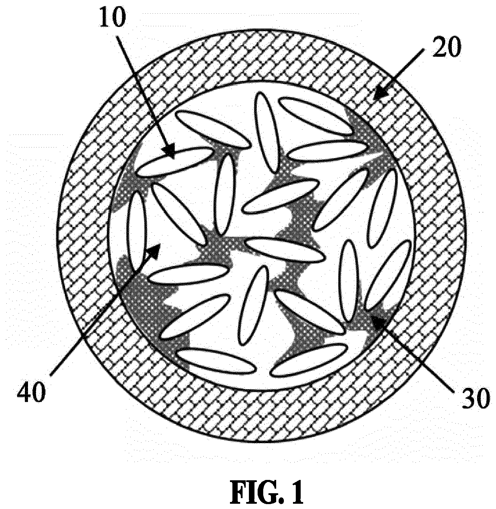

FIG. 1 is a schematic diagram illustrating an anode active material according to an embodiment;

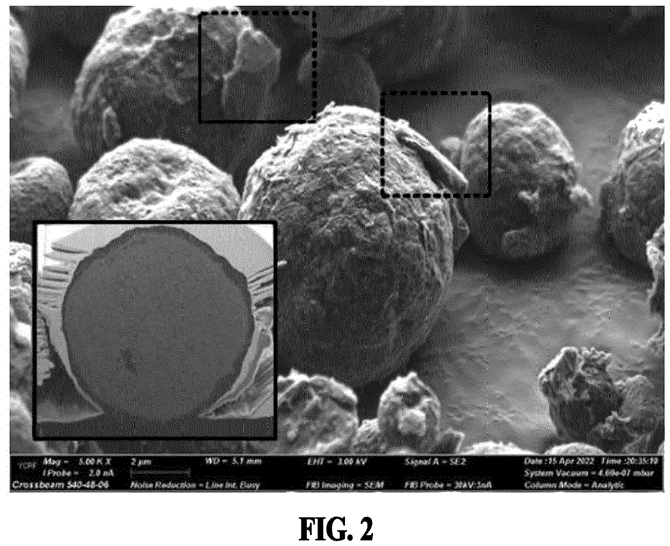

FIG. 2 is a diagram illustrating a scanning electron microscope (SEM) image of an anode active material according to an embodiment;

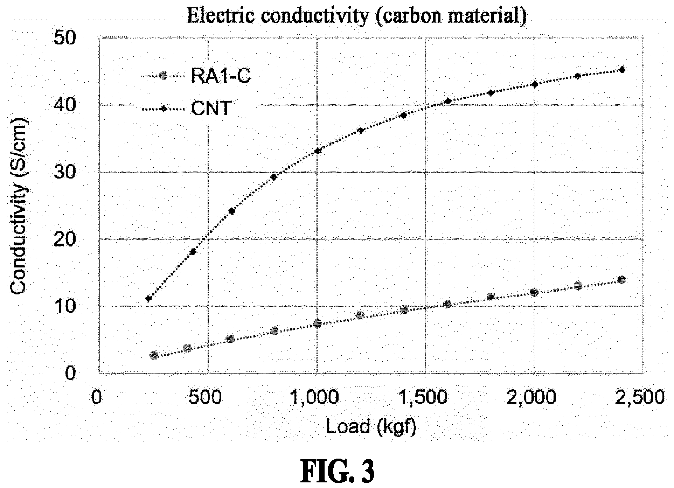

FIG. 3 is a diagram illustrating a result of measuring electrical conductivity of a carbon material obtained by heat treatment of an acrylic polymer at 930°C in a nitrogen atmosphere and carbon nanotubes (CNTs);
FIG. 4 is a diagram illustrating comparison of Raman spectroscopy between Examples 1 to 3 and Comparative Example 2 according to the present disclosure;
FIG. 5 is a diagram illustrating comparison of electrical conductivity between Examples 1 to 3 and Comparative Examples 1 and 2 according to the present disclosure;
FIG. 6 is a diagram illustrating evaluation of a lifespan characteristic of Examples 1 to 3 and Comparative Examples 1 and 2 according to the present disclosure; and
FIG. 7 is a diagram illustrating evaluation of an output characteristic of Examples 1 to 3 and Comparative Examples 1 and 2 according to the present disclosure.

DETAILED DESCRIPTION

Hereinafter, embodiments will be described in detail with reference to the accompanying drawings. However, various alterations and modifications may be made to the embodiments. Here, the embodiments are not construed as limited to the disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like components and a repeated description related thereto will be omitted. In the description of embodiments, detailed description of well-known related structures or functions will be omitted when it is deemed that such description will cause ambiguous interpretation of the present disclosure.

According to an aspect of the present disclosure, there is provided an anode active material for a lithium secondary battery having a core-shell structure composite, the anode active material including a core including porous spherical particles including metal particles and amorphous carbon, and a shell including one or more of crystalline carbon and amorphous carbon, wherein the metal particles of the core are physically connected to each other through the amorphous carbon of the core.

The metal particles included in a core portion of the anode active material may include one or more selected from a group consisting of Si, Al, Zn, Ca, Mg, Fe, Mn, Co, Ni, and Ge, may be desirably silicon (Si) particles from a viewpoint of improving an energy density and a maximum capacity of the anode active material, and may be more desirably Si-containing nanoparticles having a size of 1000 nm or less, in order to suppress a volume change of the silicon or the like.

In addition, the Si-containing nanoparticles may include one or more of silicon nanoparticles, silicon oxide nanoparticles, silicon carbide nanoparticles, and silicon alloy nanoparticles, and may desirably include silicon nanoparticles.

An average particle size $D_{50}$ of the Si-containing nanoparticles may be 50 nm to 1000 nm, desirably 80 nm to 500 nm, and more desirably 80 nm to 130 nm.

When the average particle size $D_{50}$ of the Si-containing nanoparticles exceeds 1000 nm, the effect of suppressing the volume change may be deteriorated to cause an effect of shortening the lifespan of the battery. When the average particle size $D_{50}$ thereof is less than 50 nm, the production cost may increase and the battery capacity and efficiency may be reduced.

Meanwhile, an average particle size of the core-shell structure composite of the anode active material according to an embodiment of the present disclosure may be 3 $\mu$m to 10 $\mu$m and desirably 5 $\mu$m to 8 $\mu$m based on $D_{50}$.

When the average particle size $D_{50}$ of the core-shell structure composite is less than 3 $\mu$m, a problem of deterioration in dispersibility in an electrode preparing process may occur due to fine powder, and when the average particle size $D_{50}$ of the core-shell structure composite exceeds 10 $\mu$m, electrode expansion due to volume expansion of the composite may be intensified, which may cause a problem regarding the lifespan and safety.

In the anode active material according to an embodiment of the present disclosure, the metal particles included in the core portion may be physically connected to each other through the amorphous carbon of the core portion.

Specifically, the metal particles in the core portion are dispersed rather than coming into contact with each other, and the amorphous carbon is interposed between the metal particles. Accordingly, interparticle contact resistance may decrease when electrons move, thereby improving electrical conductivity and obtaining an excellent output characteristic or charging speed.

In addition, as the amorphous carbon is used, binding between silicon particles may be strengthened so that an electrical conduction path of the metal particles is maintained and stable electrochemical reactions are possible even when the lithium secondary battery is continuously charged and discharged, and as a result, the improved lifespan characteristic (long lifespan) may be obtained.

The improved electrical conductivity of the anode active material according to an embodiment of the present disclosure may show, specifically, electrical conductivity of about 15 S/cm or more, and more desirably electrical conductivity of 16 S/cm.

In addition, the core portion of the anode active material according to an embodiment of the present disclosure may have a $I_D/I_G$ value of 1.0 or more through Raman spectroscopy.

Here, the $I_D$ refers to a D band intensity of carbon in the vicinity of a wavelength of 1320 cm$^{-1}$, specifically, in a range of wavelengths of 1320 cm$^{-1}$ to 1350 cm$^{-1}$, and the D band of carbon in the vicinity of the wavelength of 1320 cm$^{-1}$ corresponds to a peak derived from the amorphous carbon. In addition, the $I_G$ refers to a G band intensity of carbon in the vicinity of a wavelength of 1600 cm$^{-1}$, specifically, in a range of wavelengths of 1580 cm$^{-1}$ to 1600 cm$^{-1}$, and the G band of carbon in the vicinity of the wavelength of 1600 cm$^{-1}$ corresponds to a peak derived from the crystalline carbon.

That is, the $I_D/I_G$ value of 1.0 or more may imply that the properties of the amorphous carbon are more excellent in the composite, compared to the crystalline carbon constituting the composite of the anode active material.

Meanwhile, the type of amorphous carbon that functions to physically connect the metal particles included in the core portion may include sucrose, a phenol resin, a naphthalene resin, a polyvinyl alcohol resin, a furfuryl alcohol resin, a furan resin, a cellulose resin, a styrene resin, a polyimide resin, an epoxy resin, or a vinyl chloride resin, coal-based pitch, petroleum-based pitch, polyvinyl chloride, mesophase pitch, tar, a block-copolymer, polyol, low molecular weight heavy oil, and the like, and more specifically, may correspond to coal-based pitch, petroleum-based pitch, or an acrylic resin, but is not limited thereto. Meanwhile, pitch having a softening point of 100°C to 250°C may be used for the above pitch.

In addition, the crystalline carbon included in the shell portion may include graphite-based carbon, and more specifically, may include natural graphite, artificial graphite, expanded graphite, and the like.

The natural graphite is naturally produced graphite, for example, flake graphite and high crystalline graphite. The artificial graphite is artificially synthesized graphite which is prepared by heating amorphous carbon to a high temperature, and examples thereof may include primary graphite, electrographite, secondary graphite, graphite fibers, and the like.

In addition, the expanded graphite may be obtained by intercalating a chemical product such as an acid or alkali between layers of graphite and swelling vertical layers of a molecular structure by heating.

Meanwhile, the shell portion may also include amorphous carbon as well as the crystalline carbon of graphite-based carbon. In this case, the amorphous carbon may correspond to the types of amorphous carbon listed above, and a content thereof to be added may be, for example, as described in Example 1 below.

A porosity of the core having the porous spherical particles may be about 20% to 50%, and more specifically, 20% to 30%. When the porosity is less than 20%, destruction of the composite may occur due to expansion of the silicon particles, which may cause deterioration of lifespan characteristic, and when the porosity exceeds 50%, an area of a contact interface with the electrolyte may increase, which may cause a decrease in initial efficiency and deterioration of the lifespan characteristic.

Meanwhile, according to an aspect of the present disclosure, there is provided a method of preparing an anode active material, the method including step a) of dispersing metal particles and amorphous carbon in a solvent, step b) of preparing a spherical precursor by performing spray drying for a dispersed solution, step c) of mixing and compounding the spherical precursor with one or more of crystalline carbon and amorphous carbon, and step d) of performing heat treatment.

The metal particles and the amorphous carbon of step a) are substantially the same as the metal particles and the amorphous carbon described in detail above, and the solvent may be a solvent including one or more selected from a group consisting of methanol, ethanol, propanol, and butanol, and may be desirably a solvent including isopropyl alcohol (IPA) among them.

In addition, a spherical precursor of the core-shell structure composite may be prepared through step b), and a temperature of the drying may be, for example, 90°C to 130°C.

The compounding process of step c) may be performed through, for example, a compounding machine manufactured by Hansol Chemical, and may be carried out under the condition of atmosphere or inert atmosphere for 1 minute to 24 hours at a reaction temperature of 40°C to 250°C.

In addition, the heat treatment of step d) may be performed at a temperature of 700°C to 1100°C for about 5 minutes to 5 hours, and more specifically, may be performed at a temperature of 800°C to 1000°C for 10 minutes to 3 hours, but is not limited thereto.

Meanwhile, according to an aspect of the present disclosure, there is provided a lithium secondary battery including an anode, a cathode, an electrolyte, wherein the anode includes the anode active material according to an embodiment of the present disclosure.

The anode may further include an anode active material that is commonly used as an anode active material of a lithium battery in the technical field, in addition to the anode active material described above. The material of the commonly used anode active material may include, for example, one or more selected from a group consisting of a lithium metal, a metal alloyable with lithium, a transition metal oxide, a non-transition metal oxide, and a carbon-based material.

In addition, the cathode may include a cathode active material, the type of the cathode active material may correspond to a lithium-containing metal oxide, and any material is applicable to the lithium secondary battery of the present disclosure as long as it is commonly used in the technical field.

Furthermore, the electrolyte may include a lithium salt-containing non-aqueous electrolyte, and specifically, a non-aqueous electrolyte, a solid electrolyte, an inorganic solid electrolyte, and the like may be used.

In addition, a separator such as a glass fiber, polyester, Teflon, polyethylene, polypropylene, or polytetrafluoroethylene (PTFE) may be included in the lithium secondary battery to be additionally disposed between the cathode and the anode.

Hereinafter, the configuration of the present disclosure and effects thereof will be described in more detail through examples and comparative examples. However, the examples are merely intended for the purpose of describing the disclosure in more detail, and thus, the scope of the disclosure is not limited to the examples.

Examples

(1) Preparation of negative electrode active material

a) Example 1

Silicon ($D_{50}$ = 102 nm) and an acrylic polymer (manufactured by Hansol Chemical, Mw = 10,000) were dispersed at a ratio of 80:20 in terms of parts by weight in an IPA solution, and the dispersion solution was subjected to spray drying to prepare a secondary spherical precursor having a size of 3 to 10 μm based on $D_{50}$.

The precursor, pitch-based carbon, and flake graphite were mixed at a ratio of 55:5:40 in terms of parts by weight, and subjected to compounding for 10 minutes by inserting the mixture into a compounding machine (manufactured by Hansol Chemical).

After a compounded product was prepared, the compounded product was subjected to the heat treatment at 930°C to prepare an anode active material.

b) Example 2

An anode active material was prepared in the same manner as in Example 1, except that the silicon and the acrylic polymer were dispersed at a ratio of 65:35 in terms of parts by weight.

c) Example 3

An anode active material was prepared in the same manner as in Example 1, except that the silicon and the acrylic polymer were dispersed at a ratio of 55:45 in terms of parts by weight.

d) Comparative Example 1

An anode active material was prepared in the same manner as in Example 1, except that the acrylic polymer was replaced with an organic fatty acid.

e) Comparative Example 2

Silicon and an organic fatty acid were dispersed at a ratio of 80:20 in terms of parts by weight in an IPA solution, CNTs were added to the dispersion solution in an amount of 2% of the silicon in terms of parts by weight, and the dispersion solution was subjected to spray drying to prepare a secondary spherical precursor having a size of 3 to 10 $\mu$m based on $D_{50}$. Then, the compounding and heat treatment were performed in the same manner as in Example 1 to finally prepare an anode active material.

(2) Preparation of coin cell

a) Preparation of coin half-cell

The anode active material prepared in each of Examples 1 to 3 and Comparative Examples 1 and 2, a conductive material (Super P), and a binder (SBR-CMC) were uniformly mixed at a weight ratio of 94:2:4 to prepare anode slurry, the anode slurry was coated on a copper thickness film current collector having a thickness of 10 $\mu$m, and the coated electrode was dried at 120°C for 20 minutes and pressed to prepare an anode.

Metal lithium was used as the anode and a counter electrode, a polyethylene (PE) separator was used as the separator, and a solution obtained by dissolving 1.0M $LiPF_6$ in a solvent obtained by mixing at a volume ratio of ethylene carbonate (EC):diethyl carbonate (DEC):dimethyl carbonate (DMC) = 3:5:2 was used as the electrolyte to prepare CR2032 type coin half-cell.

b) Preparation of coin full-cell

The same anode used in the coin half-cell was used, and a cathode was prepared as follows.

$LiNi_{0.6}Co_{0.2}Mn_{0.2}O_2$, as a cathode active material, a conductive material (Super P), and a binder (PVDF) were mixed at a weight ratio of 95:2:3 to prepare cathode slurry, the cathode slurry was coated on an aluminum foil current collector having a thickness of 12 $\mu$m, and the coated electrode plate was dried at 120°C for 15 minutes and pressed to prepare a cathode.

The cathode and the anode were used, a PE separator was used as the separator, and a solution obtained by dissolving 1.5M $LiPF_6$ in a mixed solution with a volume ratio of EC:DEC:DMC = 2:1:7 + FEC 5% to prepare CR2032 type coin full-cell.

(3) Method of evaluating physical properties (Table 1)

a) Measurement of particle size

Average particle sizes of the silicon particles and the precursor were measured by a particle size measurement system (Mastersizer 3000, Malvern Panalytical) using an organic solution in which the anode active material was dispersed.

b) Measurement of carbon content

A carbon content was measured using a quantity of a gas generated by burning the anode active material at a high temperature (ELEMENTRAC CS-I, ELTRA).

c) Calculation of porosity

A porosity of the core portion was calculated by the following equation. In the equation below, a true density was 2.33 g/cc. In addition, a total pore volume of the equation below was measured by TriStar II 3020 instrument manufactured by Micromeritics. The total pore volume was measured using an adsorption amount of a nitrogen gas according to a relative pressure change at a temperature of liquid nitrogen (77K).

$$\text{Porosity (\%)} = \frac{\text{Total pore volume (cc·g}^{-1})}{\dfrac{1}{\text{True density (g·cc}^{-1})} + \text{Total pore volume (cc·g}^{-1})}$$

d) Raman spectroscopy

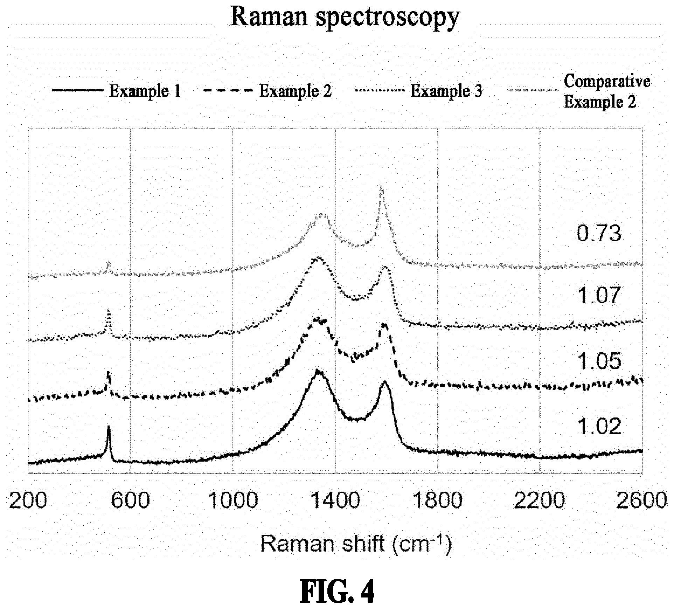

The precursors of the anode active materials prepared in Examples 1 to 3 and Comparative Example 2 were analyzed using a LabRam HR Evolution Raman spectrometer (Horiba Jbin-Yvon, France).
In a case of Comparative Example 1, the D band of carbon was not measured since there was no amorphous carbon in the core.
In the Raman spectroscopy, an argon ion laser operating at a power of 10 mW with an excitation wavelength of 514 nm was used. As shown in FIG. 4, a peak corresponding to the silicon (in the vicinity of 500 cm$^{-1}$) and peaks corresponding to the D band (in the vicinity of 1320 cm$^{-1}$) and the G band (in the vicinity of 1600 cm$^{-1}$) of carbon were respectively confirmed.
In the Raman spectrum of the precursor of Comparative Example 2 to which CNTs were added, a very low $I_D/I_G$ value was confirmed.

e) Measurement of powder electrical conductivity

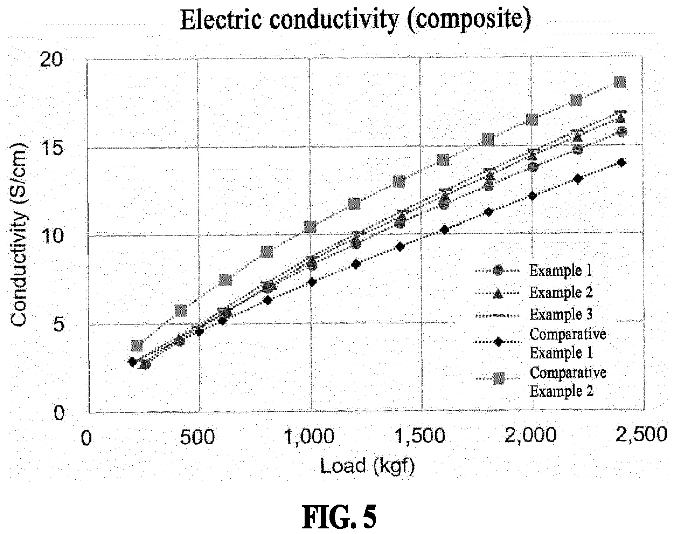

A powder electrical conductivity of each of the anode active materials prepared in Examples 1 to 3 and Comparative Examples 1 and 2 was measured.
In this measurement method, the powder was pelletized and the electrical conductivity of the powder was measured through a 4-probe measurement method. After loading 500 g of each anode active material into a powder resistance measurement container, the generated electrical resistance was measured and converted to electrical conductivity. At this time, the electrical resistance was measured in real time while compressing the powder pellet.
The results thereof are shown in FIG. 5, and it is found that high electrical conductivity is exhibited in Examples 1 to 3 according to the present disclosure, compared to Comparative Example 1. In a case of Comparative Example 2, it is found that a relatively high electrical conductivity was exhibited due to the presence of CNTs included in the precursor.

(4) Method of evaluating electrochemical (Table 2)

A coin full-cell was used to evaluate the lifespan characteristic and high rate characteristic, and a coin half-cell was used to evaluate other battery characteristics.

a) Coin half-cell

The coin half-cell manufactured using the anode active material prepared in each of Examples 1 to 3 and Comparative Examples 1 and 2 according to the present disclosure was charged with a constant current with a current of 0.1 C rate at 25°C until a voltage reached 0.01 V (vs. Li), and was charged with a constant voltage until the current became 0.05 C while maintaining 0.01 V. The charged cell was rested for 10 minutes and discharged with a constant current of 0.1 C until the voltage reached 1.5 V (vs. Li) during the discharge (performed twice, initial formation).
Meanwhile, "C" is a discharge rate of the cell, and refers to a value obtained by dividing a total capacity of the cell by a total discharge time.

An initial charge capacity and an initial discharge capacity are the charge and discharge capacities in the first cycle, which are calculated by the equation below.

$$\text{Initial efficiency } [\%] = (\text{first cycle discharge capacity/first cycle charge capacity}) \times 100$$

b) Coin full-cell

The coin full-cell manufactured using the anode active material prepared in each of Examples 1 to 3 and Comparative Examples 1 and 2 was charged with a constant current with a current of 0.1 C rate at 25°C until a voltage reached 4.2 V, and was charged with a constant voltage until the current became 0.05 C while maintaining 4.2 V. The charged cell was rested for 10 minutes and discharged with a constant current of 0.1 C until the voltage reached 2.7 V during the discharge (performed twice, initial formation).

Then, the cell was charged with a constant current with a current of 1.0 C rate at 25°C until the voltage reached 4.2 V, and charged with a constant voltage until the current became 0.05 C while maintaining 4.2 V. The charged coin cell was rested for 10 minutes, and a cycle of discharging with a constant current of 1.0 C until the voltage reached 2.7 V during the discharge was repeated (first to 100th cycles).

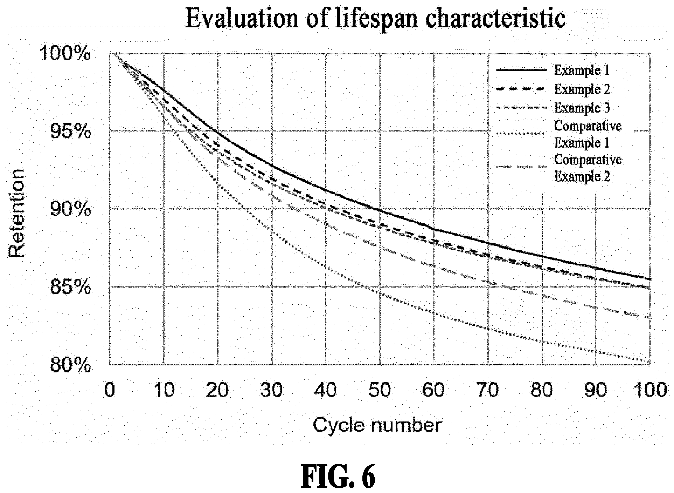

The lifespan characteristic was calculated by the equation below, and a result thereof was shown in FIG. 6.

$$\text{Lifespan characteristic } [\%] = (\text{100th cycle discharge capacity/first cycle discharge capacity}) \times 100$$

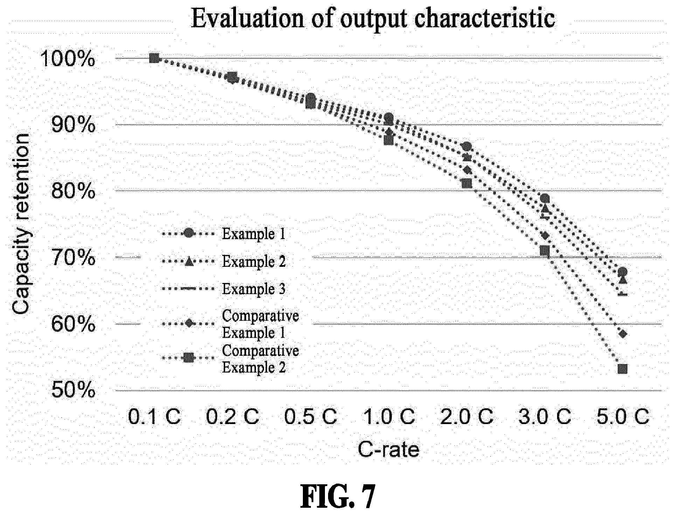

A measured output characteristic of the cell using the anode active material prepared in each of Examples 1 to 3 and Comparative Examples 1 and 2 was calculated by the equation below, and a result thereof was shown in FIG. 7.

$$\text{Output characteristic } [\%] = (\text{discharge capacity of 5.0 C/discharge capacity of 0.1 C}) \times 100$$

In addition, data results summarizing the experiments of Examples 1 to 3 and Comparative Examples 1 and 2 are shown in Tables 1 and 2 below.

[Table 1]

|  | Silicon Particle size ($D_{50}$) | Secondary Particle size ($D_{50}$) | Precursor Carbon content | Precursor (core portion) Porosity | Precursor Raman ($I_D/I_G$) | Composite Electrical conductivity |
|---|---|---|---|---|---|---|
| Example 1 | 102 nm | 5.8 μm | 2.98% | 22.8% | 1.02 | 15.7 |
| Example 2 | 102 nm | 6.1 μm | 5.03% | 23.7% | 1.05 | 16.5 |
| Example 3 | 102 nm | 5.3 μm | 6.76% | 24.7% | 1.07 | 16.8 |
| Comparative Example 1 | 102 nm | 6.0 μm | 0.37% | 35.8% | - | 14.0 |
| Comparative Example 2 | 102 nm | 5.4 μm | 4.61% | 34.9% | 0.73 | 18.5 |

[Table 2]

| | Charge capacity (mAh g$^{-1}$) | Discharge capacity (mAh g$^{-1}$) | Initial efficiency (%) | Lifespan characteristic (% @ 100th) | Output characteristic ($C_{0.1}/C_{5.0}$) |
|---|---|---|---|---|---|
| Cell type | Coin half-cell | | | Coin full-cell | |
| Example 1 | 1596.1 | 1420.7 | 89.0 | 85.5 | 67.8 |
| Example 2 | 1611.9 | 1417.8 | 88.0 | 84.9 | 66.7 |
| Example 3 | 1618.1 | 1425.0 | 88.1 | 84.9 | 64.4 |
| Comparative Example 1 | 1616.3 | 1411.8 | 87.4 | 83.0 | 58.4 |
| Comparative Example 2 | 1643.3 | 1397.0 | 85.1 | 80.1 | 53.1 |

From this, it is found that the electrical conductivity, the initial efficiency, the lifespan characteristic, and the output characteristic of Examples 1 to 3 according to an embodiment of the present disclosure are more excellent than those in Comparative Example 1 in which the core portion does not include amorphous carbon, and it is found that, in Comparative Example 2 in which the core portion includes CNT, high electrical conductivity is exhibited due to the presence of the CNT, but the discharge capacity, the initial efficiency, the lifespan characteristic, and the output characteristic show poor results compared to those in Examples 1 to 3.

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order, and/or if described components are combined in a different manner, and/or replaced or supplemented by other components or their equivalents.

Therefore, other implementations, other embodiments, and equivalents to the claims are also within the scope of the following claims.

Explanation of Reference Numerals

    10: Silicon particle
    20: Graphite-based carbon
    30: Amorphous carbon
    40: Pore of core portion

**Claims**

1.  An anode active material for a lithium secondary battery having a core-shell structure composite, the anode active material comprising:

    a core comprising porous spherical particles comprising metal particles and amorphous carbon; and
    a shell comprising one or more of crystalline carbon and amorphous carbon,
    wherein the metal particles of the core are physically connected to each other through the amorphous carbon of the core.

2.  The anode active material of claim 1, wherein the metal particles comprise one or more selected from a group consisting of Si, Al, Zn, Ca, Mg, Fe, Mn, Co, Ni, and Ge.

3.  The anode active material of claim 1, wherein the metal particles are Si-containing nanoparticles.

4.  The anode active material of claim 3, wherein the Si-containing nanoparticles comprise one or more selected from a group consisting of silicon nanoparticles, silicon oxide nanoparticles, silicon carbide nanoparticles, and silicon alloy nanoparticles.

5. The anode active material of claim 3, wherein an average particle size of the Si-containing nanoparticles is 80 nm to 130 nm based on $D_{50}$.

6. The anode active material of claim 1, wherein an average particle size of the core-shell structure composite is 3 $\mu$m to 10 $\mu$m based on $D_{50}$.

7. The anode active material of claim 1, wherein the core-shell structure composite has electrical conductivity of 15 S/cm or more.

8. The anode active material of claim 1, wherein the metal particles are dispersed in the core without coming into contact with each other.

9. The anode active material of claim 1,

wherein an $I_D/I_G$ value of the core according to Raman spectroscopy is 1.0 or more,
wherein the $I_D$ is a D band intensity of carbon at a wavelength of 1320 cm$^{-1}$ to 1350 cm$^{-1}$, and
wherein the $I_G$ is a G band intensity of carbon at a wavelength of 1580 cm$^{-1}$ to 1600 cm$^{-1}$.

10. The anode active material of claim 1, wherein the amorphous carbon comprises one or more selected from a group consisting of sucrose, a phenol resin, a naphthalene resin, a polyvinyl alcohol resin, a furfuryl alcohol resin, a furan resin, a cellulose resin, a styrene resin, a polyimide resin, an epoxy resin, or a vinyl chloride resin, coal-based pitch, petroleum-based pitch, polyvinyl chloride, mesophase pitch, tar, a block-copolymer, polyol, and low molecular weight heavy oil.

11. The anode active material of claim 1, wherein the crystalline carbon is graphite-based carbon.

12. The anode active material of claim 1, wherein the core comprising the porous spherical particles has a porosity of 20% to 50%.

13. A method of preparing an anode active material, the method comprising:

step a) of dispersing metal particles and amorphous carbon in a solvent;
step b) of preparing a spherical precursor by performing spray drying for a dispersed solution;
step c) of mixing and compounding the spherical precursor with one or more of crystalline carbon and amorphous carbon; and
step d) of performing heat treatment.

14. The method of claim 13,

wherein the metal particles are Si-containing nanoparticles,
wherein the amorphous carbon in step a) comprises one or more selected from a group consisting of sucrose, a phenol resin, a naphthalene resin, a polyvinyl alcohol resin, a furfuryl alcohol resin, a furan resin, a cellulose resin, a styrene resin, a polyimide resin, an epoxy resin, or a vinyl chloride resin, coal-based pitch, petroleum-based pitch, polyvinyl chloride, mesophase pitch, tar, a block-copolymer, polyol, and low molecular weight heavy oil, and
wherein the solvent comprises one or more selected from a group consisting of methanol, ethanol, propanol, and butanol.

15. The method of claim 13,

wherein the amorphous carbon in step c) comprises one or more selected from a group consisting of sucrose, a phenol resin, a naphthalene resin, a polyvinyl alcohol resin, a furfuryl alcohol resin, a furan resin, a cellulose resin, a styrene resin, a polyimide resin, an epoxy resin, or a vinyl chloride resin, coal-based pitch, petroleum-based pitch, polyvinyl chloride, mesophase pitch, tar, a block-copolymer, polyol, and low molecular weight heavy oil, and
wherein the crystalline carbon is graphite-based carbon.

**16.** A lithium secondary battery comprising:

an anode;
a cathode; and
an electrolyte,
wherein the anode comprises the anode active material of claim 1.

**FIG. 1**

**FIG. 2**

FIG. 3

FIG. 4

**FIG. 5**

FIG. 6

FIG. 7

## EUROPEAN SEARCH REPORT

Application Number

EP 23 19 6784

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/161635 A1 (LIU ZUQIN [US] ET AL) 21 May 2020 (2020-05-21) * paragraphs [0006], [0009], [0016], [0017], [0043], [0045], [0052] * * figure 4 * * claim 17 * | 1-12,16 | INV. H01M4/134 H01M4/36 H01M4/38 H01M4/62 H01M10/0525 |
| X | CN 110 165 187 A (ANPU RUISI NANJING CO LTD) 23 August 2019 (2019-08-23) * example 1 * | 13-15 | ADD. H01M4/02 |
| A | US 2020/411844 A1 (OH DOORI [KR] ET AL) 31 December 2020 (2020-12-31) * the whole document * | 1-16 | |
| A | KR 101 856 926 B1 (LG CHEMICAL LTD [KR]) 10 May 2018 (2018-05-10) * the whole document * | 1-16 | |

TECHNICAL FIELDS SEARCHED (IPC)

H01M

The present search report has been drawn up for all claims

| Place of search | Date of completion of the search | Examiner |
|---|---|---|
| Munich | 23 January 2024 | Gregori, Giuliano |

EPO FORM 1503 03.82 (P04C01)

## ANNEX TO THE EUROPEAN SEARCH REPORT
## ON EUROPEAN PATENT APPLICATION NO.

EP 23 19 6784

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2024

| Patent document cited in search report | | Publication date | Patent family member(s) | | Publication date |
|---|---|---|---|---|---|
| US 2020161635 | A1 | 21-05-2020 | NONE | | |
| CN 110165187 | A | 23-08-2019 | NONE | | |
| US 2020411844 | A1 | 31-12-2020 | KR 20210000983 A | | 06-01-2021 |
| | | | US 2020411844 A1 | | 31-12-2020 |
| KR 101856926 | B1 | 10-05-2018 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220115649